# EUROPÄISCHE PATENTSCHRIFT

(11) **EP 1 086 761 B1**
(45) Veröffentlichungstag und Bekanntmachung des Hinweises auf die Patenterteilung: **14.07.2004**
(21) Anmeldenummer: 00810709.6
(22) Anmeldetag: 09.08.2000
(51) Int. Cl.: B21D 39/04, G01L 5/00, B25B 27/10, G01N 3/58

(54) **Verfahren und Vorrichtung für die Verschleissprüfung an Presszangen**
Method and device for checking wear of crimping pliers
Procédé et dispositif pour contrôler l'usure de pinces à sertissage

(30) Priorität: 27.09.1999 CH 176599
(43) Veröffentlichungstag der Anmeldung: 28.03.2001
(73) Patentinhaber: GEBERIT TECHNIK AG, 8645 Jona (CH)
(72) Erfinder: Rüegg, Urs, 8640 Rapperswil (CH); Marti, Silvio, 8640 Rapperswil (CH); Tanner, Werner, 8713 Uerikon (CH)
(74) Vertreter: Groner, Manfred

(56) Entgegenhaltungen:
- EP-A- 0 060 025
- EP-A- 0 908 252
- DE-A- 19 616 975
- DE-U- 29 602 238
- DE-U- 29 602 240
- FR-A- 2 607 252

## Beschreibung

Die Erfindung betrifft ein Verfahren und eine Vorrichtung für die Verschleissprüfung an Presszangen, die wenigstens zwei Pressbacken aufweisen, die zu einem im wesentlichen geschlossenen Pressraum zusammenbewegbar sind. Presszangen werden verwendet, um Rohrverbindungen insbesondere mit Pressfittingen herzustellen. Die Rohrenden werden über die Pressfittinge geschoben und mit einer Presszange radial verpresst. Hierbei wird das Rohr plastisch verformt. Die verwendeten Presszangen weisen in der Regel zwei Pressbacken auf, die mittels eines hydraulischen Antriebes verschwenkt werden. Es gibt aber auch Presszangen, die von Hand bedienbar sind und zur Kraftverstärkung eine geeignete Hebelübersetzung aufweisen.

Bei der Herstellung von Rohrleitungen, insbesondere Wasserleitungen ist es wesentlich, dass der Pressvorgang vollständig erfolgt und eine vorbestimmte Endpressstellung erreicht wird. Verschleiss an den Lagern und fehlerhaft arbeitende Antriebe können dazu führen, dass die genannte Endpresstellung nicht mehr erreicht wird. Beim Pressvorgang und an der hergestellten Verbindung ist eine solche mangelhafte Verpressung nicht ohne weiteres feststellbar. Nicht richtig hergestellte Verbindungen können zu sehr hohen Bauschäden führen und müssen deshalb vermieden werden.

Durch die DE 29602238 U1 ist ein Prüfgerät für die Verschleissprüfung an Presszangen bekannt geworden, das durch eine einen Messort aufweisende Geräteaufnahme für die Positionierung des Pressgerätes sowie eine Spaltmesseinrichtung aufweist. Die Spaltmesseinrichtung besitzt einen dem Messort zugeordneten Spaltbreitendetektor für die Erfassung der Spaltbreite zwischen den gegenüberliegenden Seiten zweier benachbarter Pressbacken. Zudem ist eine Anzeige zur Darstellung einer Information über die Spaltbreite vorgesehen. Beim Prüfvorgang wird eine Leerverpressung durchgeführt. Dieses Prüfgerät ist vergleichsweise aufwendig und kann lediglich vom geschulten Personal bedient werden.

Ein Pressgerät, das ebenfalls auf einem vergleichsweise aufwendigen Messvorgang beruht, ist zudem aus der DE 29602240 U1 bekannt.

Ein wesentlich einfacheres Verfahren für die Verschleissprüfung ist aus der EP 0908252 A2 bekannt geworden. Bei diesem Verfahren wird ein Prüfkörper als Referenz für die vorhandene Prüfkraft verpresst. Der Prüfkörper wird ebenfalls bei einer Leerverpressung zwischen zwei Pressbacken flachgepresst. Es handelt sich aber auch bei diesem Verfahren grundsätzlich um einen Messvorgang, der einer sorgfältigen Auswertung bedarf.

Der Erfindung liegt die Aufgabe zugrunde, ein Verfahren sowie eine Vorrichtung für die Verschleissprüfung an Presszangen zu schaffen, die noch einfacher und trotzdem sicher sind.

Das erfindungsgemässe Verfahren ergibt sich aus Anspruch 1 und die erfindungsgemäße Vorrichtung aus Anspruch 8. Die erfindungsgemässe Vorrichtung ist dadurch gekennzeichnet, dass das Prüfelement einen Indikator aufweist und dieses Prüfelement beim Verpressen eines Gegenstandes zwischen den Stirnseiten der Pressbacken anzuordnen und so ausgebildet ist, dass es bei einer vorbestimmten vergleichsweise kleinen Spaltbreie verpresst wird.

Für die Erfindung ist es wesentlich, dass kein Messvorgang durchgeführt wird, sondern lediglich festgestellt wird, ob bei einem Pressvorgang der Pressraum im wesentlichen geschlossen werden kann und somit die vorgesehene Endpresstellung erreicht wird. Beim erfindungsgemässen Verfahren wird somit nicht eine Leerverpressung durchgeführt, sondern es wird eine Verbindung verpresst. Wird die Endpresstellung nicht erreicht, so ist die Presszange, bzw. das Pressgerät nicht mehr tauglich und muss revidiert und ersetzt werden. Wird die Endpressstellung erreicht, so ist dies am verpressten Indikator vorzugsweise von Auge sichtbar und damit kann davon ausgegangen werden, dass die Presszange bzw. das Pressgerät in Ordnung ist. Ein Auswerten oder Überprüfen von Messdaten ist beim erfindungsgemässen Verfahren nicht erforderlich.

Das erfindungsgemässe Verfahren ist dann besonders einfach und sicher, wenn gemäss einer Weiterbildung der Erfindung der Indikator bei der Beaufschlagung durch die Stirnflächen der Pressbacken einen Farbwechsel erfährt. Das Resultat der Verschleissprüfung ist dann sehr einfach und sicher erkennbar.

Nach einer Weiterbildung der Erfindung ist der Indikator Teil eines flächigen, insbesondere streifenförmigen Prüfelementes. Dieses Prüfelement kann vor dem Verpressen auf die Stirnfläche einer Pressbacke aufgebracht, insbesondere aufgeklebt werden. Die Dicke dieses Prüfelementes ist vergleichsweise klein und vorzugsweise kleiner als 1 mm. Die Presszange muss damit im wesentlichen geschlossen werden, um das Prüfelement zu beaufschlagen und eine entsprechende Anzeige zu bewirken. Für eine besonders einfache Handhabung ist vorgesehen, das Prüfelement an einem Halter oder Griff anzubringen. Dieser Halter oder Griff ist vorzugsweise ein plattenförmiges Element, auf den eine Gebrauchsanweisung aufgedruckt sein kann. Der Halter oder Griff kann zudem mit einem Anschlag versehen sein und dadurch die Positionierung des Prüfelementes erleichtern.

Nach einer Weiterbildung der Erfindung ist vorgesehen, auf diesem Halter oder Griff eine selbstklebende Kontrolletikette anzubringen. Dieses Kontrolletikette wird nach dem Prüfvorgang auf das geprüfte Gerät aufgeklebt, wenn der Prüfvorgang positiv verlaufen ist. Ist nach einer Weiterbildung der Erfindung die Kontrolletikette wenigstens bereichsweise ein Teil des Prüfelementes, so kann das Resultat des Prüfvorganges auch an der Kontrolletikette festgestellt werden. Damit wird die Sicherheit der Prüfung noch weiter erhöht.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht einer erfindungsgemässen Vorrichtung,
- Figur 2: eine weitere Ansicht der Vorrichtung gemäss Figur 1,
- Figur 3: ein vertikaler Schnitt durch ein Prüfelement entlang der Linie III-III der Figur 2 und
- Figuren 4 bis 6: schematisch die wesentlichen Schritte des erfindungsgemässen Verfahrens.

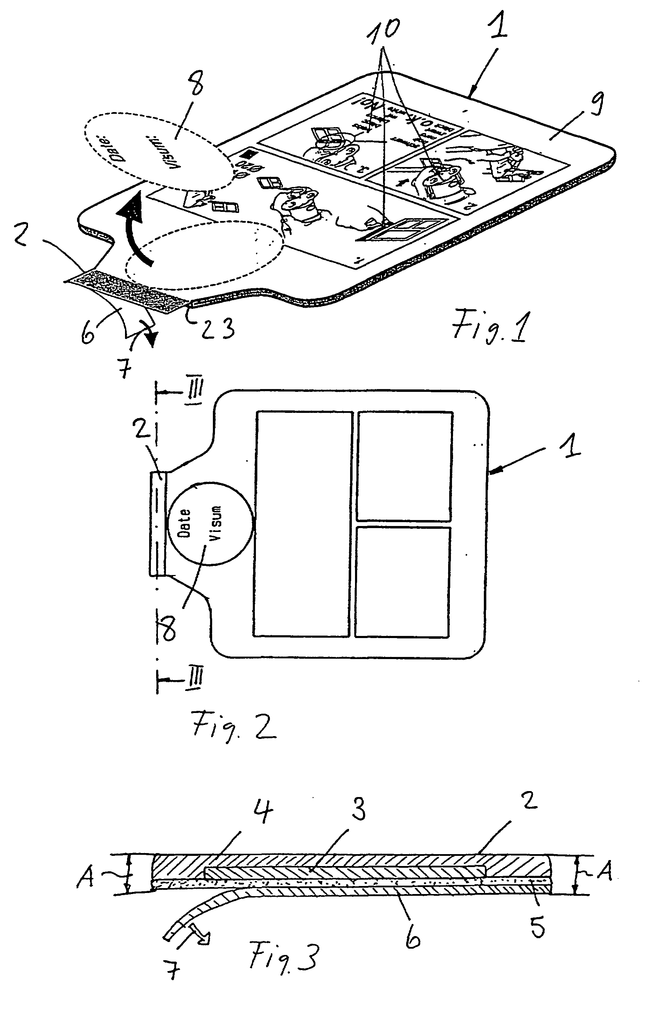

Die in den Figuren 1 und 2 gezeigte Vorrichtung 1 besteht im wesentlichen aus einem streifenförmigen Prüfelement 2 sowie einem daran angebrachten plattenförmigen Griff oder Halter 9. Auf dem Griff 9 ist eine Bedienungsanleitung 10 aufgedruckt sowie eine selbstklebende Kontrolletikette 8 aufgeklebt. Auf dem Griff oder Halter 9 können auch mehrere Prüfelemente 2 angeordnet sein.

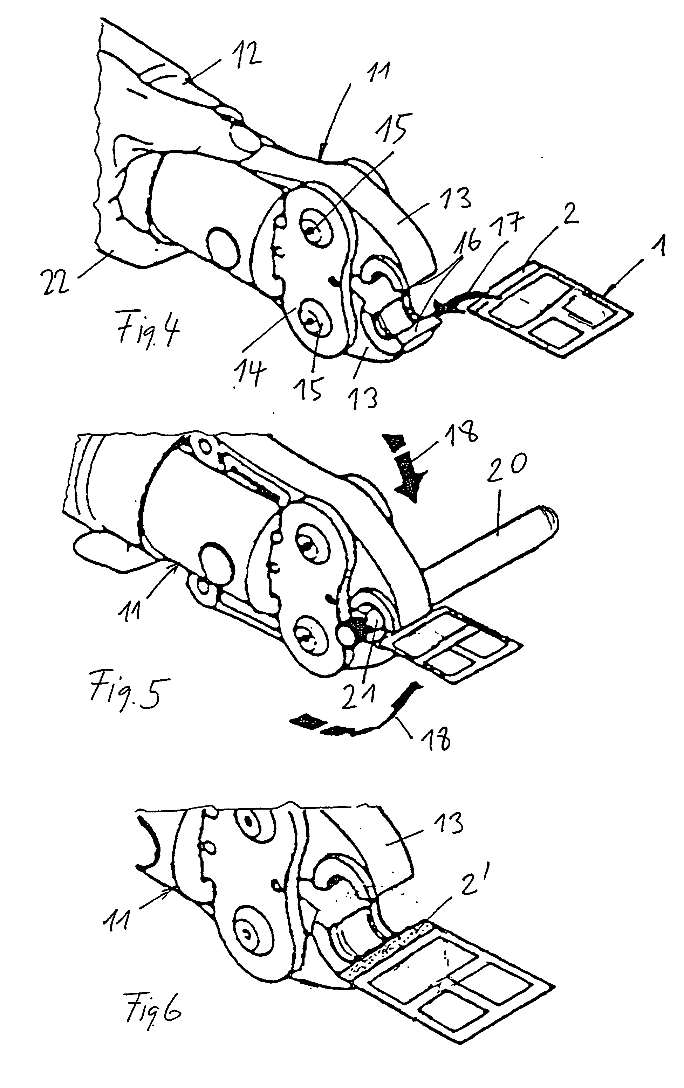

Das Prüfelement 2 besteht gemäss Figur 3 aus einem Indikator 3, der von einer folienartigen Schicht 4 sowie einer Klebstoffschicht 5 umgeben ist. Diese Schicht 5 ist von einer Schutzfolie 6 abgedeckt. Die Dicke A des Prüfelementes 2 ist vergleichsweise klein, vorzugsweise kleiner als 1 mm und insbesondere kleiner als 0,3 mm. Die bevorzugte Dicke A beträgt etwa 0,2 oder 0,1 mm. Der Indikator 3 ist vorzugsweise ein Stoff, der bei einer Druckbeaufschlagung einen Farbwechsel ergibt. Die Folie 4 ist dann vorzugsweise transparent, so dass ein Farbwechsel des Indikators 3 von Auge feststellbar ist. Als Indikator 3 eignet sich beispielsweise der aus der EP 0060025 A2 bekannte Temperaturindikator. Solche Indikatoren sind im Handel erhältlich. Es hat sich gezeigt, dass solche Temperaturindikatoren auch beim Verpressen einen von Auge sichtbaren Farbumschlag ergeben. Beispielsweise ist der Indikator 3 des Prüfelementes 2 vor dem Verpressen grau und nach dem Verpressen schwarz. Es sind hier aber selbstverständlich auch andere Farbänderungen oder Farbumschläge möglich. Der Begriff-Indikator wird hier weit verstanden und umfasst auch nichtchemische Mittel, mit denen eine Verpressung des Prüfelementes 2 vorzugsweise visuell erkennbar ist.

Die Vorrichtung 1 wird gemäss Figur 4 vor dem Verpressen eines Rohres (20) auf einem Fitting (21) auf einer der Stirnseiten 16 der beiden Pressbacken 13 aufgeklebt. Dazu wird vorgängig der Schutzstreifen 6 von der Klebstoffschicht 5 abgezogen, wie dies in den Figuren 1 und 3 durch den Pfeil 7 angedeutet ist. Das streifenförmige Prüfelement 2 überdeckt vorzugsweise die gesamte Fläche der Stirnseite 16, auf welche der Prüfstreifen 2 aufgeklebt ist. Das Schliessen der beiden Pressbacken 13, die in bekannter Weise mittels zwei Bolzen 15 an Lagerplatten 14 verschwenkbar gelagert sind, erfolgt mittels eines hydraulischen Antriebs 12. Die Presszange 11 wird hier bei mit einer Hand 22 gehalten. Die Presszange 11 kann aber auch eine einfache mechanische Zange ohne hydraulischen Antrieb sein.

Beim Schliessen der beiden Pressbacken 13 wird in bekannter Weise das Rohr 20 auf dem Pressfitting 21 verpresst. Es sind hier aber auch andere Verbindungen denkbar, beispielsweise auch solche ohne Pressfitting 21. Wesentlich ist der Pressvorgang, bei dem ein im wesentlichen geschlossener Pressraum gebildet wird.

Nachfolgend wird anhand der Figuren 4 bis 6 das erfindungsgemässe Verfahren erläutert.

Die Vorrichtung 1 wird am Griff 9 gehalten und der Schutzstreifen 6 wird von Hand abgezogen, wie dies in den Figuren 1 und 3 angedeutet ist. Nun wird die Vorrichtung 1 auf einer der Stirnseiten 16 aufgeklebt, wobei das Prüfelement 2 die entsprechende Stirnseite 16 überdeckt und an dieser flach aufliegt. Zur Positionierung dient eine Stirnseite 23 (Fig. 1) des Griffs 9, welche sich unterhalb des Prüfelementes 2 befindet. Nun wird das Rohr (20) mit dem Pressfitting (21) eingelegt und der Pressvorgang durchgeführt. Anschliessend werden in bekannter Weise die beiden Pressbacken 13 geöffnet bis sie die in Figur 6 gezeigte Stellung erreicht haben. Wurde beim Pressvorgang die vorgesehene Endstellung der Pressbacken 3 erreicht, so wurde das Prüfelement 2 ordnungsgemäss verpresst. Dieser Pressvorgang am Prüfelement 2 ist durch die Farbänderung des Indikators 3 von Auge sichtbar. Der Prüfstreifen 2' gemäss Figur 6 ist hier beispielsweise wenigstens bereichsweise schwarz. Wurde der Pressraum beim Pressvorgang nicht vollständig geschlossen und entsprechend das Prüfelement 2 nicht vollständig verpresst, so ist dies am Prüfelement 2 sichtbar, da keine Farbänderung stattgefunden hat. Der Prüfstreifen 2 ist beispielsweise weiterhin grau. Wurde lediglich ein Teilbereich des Indikators 3 verpresst, so ist dies am Prüfstreifen 2 nach dem Pressvorgang ebenfalls ersichtlich. Eine solche lediglich teilsweise Beaufschlagung des Prüfelementes 2 deutet ebenfalls auf einen Verschleiss oder einen anderen Defekt hin. Auch in diesem Fall ist eine Revision oder ein Ersatz der Presszange 11 erforderlich.

Ist die Presszange 11 in Ordnung, so wird die Prüfetikette 8 mit dem Datum, Visum, einer Maschinenummer oder dergleichen versehen und auf die Presszange 11 aufgeklebt. Vorzugsweise ist die Prüfetikette 8 ebenfalls mit einem Indikator 3 versehen und ragt in den Bereich des Prüfelementes 2. Eine ordnungsgemässe Verpressung ist damit an einem entsprechenden Farbumschlag am Prüfetikett 8 direkt erkennbar. Die Vorrichtung 1 ist für den Einmalgebrauch vorgesehen. Dies ist möglich, da die Vorrichtung A1 sehr kostengünstig hergestellt werden kann. Da die Handhabung sehr einfach ist, ist ein Prüfvorgang auch auf der Baustelle ohne weiteres möglich. Der Prüfvorgang ist für jedermann durchführbar und Fehlinterpretationen sind kaum möglich.

## Patentansprüche

1. Verfahren für die Verschleissprüfung an Presszangen, die wenigstens zwei Pressbacken (13) aufweisen, die zu einem im wesentlichen geschlossenen Pressraum zusammenbewegbar sind, **gekennzeichnet durch** folgende Schritte:
a) Anordnen eines Prüfelementes (2) mit einem Indikator (3) zwischen den Stirnflächen (16) der Pressbacken (13),
b) Anlegen der Presszange (11) an einen zu verpressenden Gegenstand (21),
c) Verpressen des Gegenstandes (20),
d) Verpressen des Indikators (3) zwischen den Stirnflächen (16) im Fall des im wesentlichen vollständig geschlossenen Pressraumes,
e) Prüfen der Reaktion des Indikators (3).

2. Verfahren nach Anspruch 1, **dadurch gekennzeichnet, dass** der Indikator (3) streifenförmig ausgebildet ist.

3. Verfahren nach Anspruch 2, **dadurch gekennzeichnet, dass** der Indikator (3) so ausgebildet ist, dass die Pressbacken (13) zum Verpressen des Indikators (3) bis auf einen Spalt kleiner als etwa 1 mm geschlossen werden müssen.

4. Verfahren nach Anspruch 3, **dadurch gekennzeichnet, dass** der Indikator eine Dicke kleiner als 1 mm aufweist.

5. Verfahren nach einem der Ansprüche 1 bis 4, **dadurch gekennzeichnet, dass** der Indikator (3) beim Verpressen durch die genannten beiden Stirnseiten (16) eine visuell sichtbare Veränderung erfährt.

6. Verfahren nach Anspruch 5, **dadurch gekennzeichnet, dass** der Indikator (3) beim Verpressen einen Farbwechsel erfährt.

7. Verfahren nach einem der Ansprüche 1 bis 6, **dadurch gekennzeichnet, dass** der Indikator (3) auf eine der Stirnflächen (16) der Pressbacken (13) aufgeklebt wird.

8. Vorrichtung für die Verschleissprüfung an Presszangen, die wenigstens zwei Pressbacken (13) aufweisen, die in einem im wesentlichen geschlossenen Raum zusammenpressbar sind, mit einem Prüfelement, **dadurch gekennzeichnet, dass** das Prüfelement (2) einen Indikator (3) aufweist und beim Verpressen eines Gegenstandes (20) zwischen den Stirnseiten (16) der Pressbacken (13) anzuordnen und so ausgebildet ist, dass der Indikator (3) unterhalb einer vorbestimmten vergleichsweise kleinen Spaltbreite verpresst wird.

9. Vorrichtung nach Anspruch 8, **dadurch gekennzeichnet, dass** das Prüfelement (2) flächig ausgebildet ist und eine Dicke (A) kleiner als 1 mm aufweist, derart, dass das Prüfelement (2) unterhalb einer Spaltbreite kleiner als 1 mm verpresst wird.

10. Vorrichtung nach Anspruch 7 oder 8, **dadurch gekennzeichnet, dass** das Prüfelement (2) streifenförmig ausgebildet ist.

11. Vorrichtung nach einem der Ansprüche 8 bis 10, **dadurch gekennzeichnet, dass** der Indikator (3) zwischen wenigstens zwei Schichten (4, 5, 6) angeordnet ist.

12. Vorrichtung nach Anspruch 11, **dadurch gekennzeichnet, dass** der Indikator (3) ein Farbmittel ist, das sich beim Verpressen zwischen den Pressbacken (134) unter eine Schutzfolie (4) verstärkt abzeichnet.

13. Vorrichtung nach einem der Ansprüche 8 bis 12, **dadurch gekennzeichnet, dass** das Prüfelement (2) selbstklebend auf einer der beiden Pressbacken (3) befestigbar ist.

14. Vorrichtung nach einem der Ansprüche 8 bis 13, **gekennzeichnet durch** einen Anschlag (23) zur Positionierung des Prüfelementes (2).

15. Vorrichtung nach einem der Ansprüche 8 bis 13, **dadurch gekennzeichnet, dass** mindestens ein Prüfelement (2) an einem Halter oder Griff (9) angebracht ist.

16. Vorrichtung nach Anspruch 15, **dadurch gekennzeichnet, dass** der Halter oder Griff (9) plattenförmig ausgebildet ist.

17. Vorrichtung nach Anspruch 15 oder 16, **dadurch gekennzeichnet, dass** auf dem Halter oder Griff (9) eine Kontrolletikette (8) angeordnet ist.

18. Vorrichtung nach Anspruch 17, **dadurch gekennzeichnet, dass** die Kontrolletikette (8) selbstklebend auf dem Halter oder Griff befestigt ist.

19. Vorrichtung nach Anspruch 17 oder 18, **dadurch gekennzeichnet, dass** die Kontrolletikette (8) wenigstens bereichsweise ein Teil des Prüfelementes (2) ist.

20. Vorrichtung nach einem der Ansprüche 15 bis 19, **dadurch gekennzeichnet, dass** der Halter oder Griff (9) Informationen (10) und insbesondere eine Anleitung für die Anwendung aufweist.

21. Vorrichtung nach einem der Ansprüche 15 bis 19, **dadurch gekennzeichnet, dass** mehrere Prüfelemente (2) am Halter oder Griff (9) angebracht sind.

## Claims

1. Method of running a wear test on crimping pliers having at least two clamping jaws (13) which can be moved together with an essentially closed compression gap, **characterised by** the following steps:
a) a test element (2) with an indicator (3) is placed between the end faces (16) of the clamping jaws (13),
b) the crimping pliers (11) are applied to an object (21) to be compressed,
c) the object (20) is compressed,
d) the indicator (3) is compressed between the end faces (16) if the compression gap is essentially completely closed,
e) the reaction of the indicator (3) is checked.

2. Method as claimed in claim 1, **characterised in that** the indicator (3) is of a strip-shaped design.

3. Method as claimed in claim 2, **characterised in that** the indicator (3) is designed so that the clamping jaws (13) must be closed to a gap of less than approximately 1 mm in order to compress the indicator (3).

4. Method as claimed in claim 3, **characterised in that** the indicator has a thickness of less than 1 mm.

5. Method as claimed in one of claims 1 to 4, **characterised in that** the indicator (3) undergoes a visually perceptible change when compressed by said two end faces (16).

6. Method as claimed in claim 5, **characterised in that** the indicator (3) undergoes a colour change when compressed.

7. Method as claimed in one of claims 1 to 6, **characterised in that** the indicator (3) is adhered to one of the end faces (16) of the clamping jaws (13).

8. Device for testing wear on crimping pliers having at least two clamping jaws (13) which can be pushed together with an essentially closed gap, incorporating a test element, **characterised in that** the test element (2) has an indicator (3) and, when an object (20) is compressed, it is placed between the end faces (16) of the clamping jaws (13) and designed so that the indicator (3) is compressed below a predefined relatively small gap width.

9. Device as claimed in claim 8, **characterised in that** the test element (2) is of a flat design and has a thickness (A) of less than 1 mm so that the test element (2) is compressed if a gap width is less than 1 mm.

10. Device as claimed in claim 7 or 8, **characterised in that** the test element (2) is of a strip-shaped design.

11. Device as claimed in one of claims 8 to 10, **characterised in that** the indicator (3) is disposed between at least two layers (4, 5, 6).

12. Device as claimed in claim 11, **characterised in that** the indicator (3) is a coloured means which produces a more pronounced indication underneath a protective film (4) when compressed between the clamping jaws (13).

13. Device as claimed in one of claims 8 to 12, **characterised in that** the test element (2) is self-adhesive and can be affixed to one of the two clamping jaws (3).

14. Device as claimed in one of claims 8 to 13, **characterised by** a stop (23) for positioning the test element (2).

15. Device as claimed in one of claims 8 to 13, **characterised in that** at least one test element (2) is mounted on a holder or handle (9).

16. Device as claimed in claim 15, **characterised in that** the holder or handle (9) is of a card-shaped design.

17. Device as claimed in claim 15 or 16, **characterised in that** an inspection label (8) is disposed on the holder or handle (9).

18. Device as claimed in claim 17, **characterised in that** the inspection label (8) is self-adhesive and is affixed to the holder or handle.

19. Device as claimed in claim 17 or 18, **characterised in that** the inspection label (8) constitutes a part of the test element (2) at least in certain regions.

20. Device as claimed in one of claims 15 to 19, **characterised in that** the holder or handle (9) contains information (10) and in particular directions for use.

21. Device as claimed in one of claims 15 to 19, **characterised in that** several test elements (2) are mounted on the holder or handle (9).

## Revendications

1. Procédé pour contrôler l'usure de pinces à sertissage, qui présentent au moins deux mâchoires de sertissage (13) qui peuvent être déplacées ensemble pour former un espace de sertissage essentiellement fermé, **caractérisé par** les étapes suivantes :
a) disposition d'un élément de contrôle (2) comprenant un indicateur (3) entre les faces frontales (16) des mâchoires de sertissage (13),
b) application de la pince à sertissage (11) contre un objet à sertir (21),
c) sertissage de l'objet (20),
d) sertissage de l'indicateur (3) entre les faces frontales (16) dans le cas où l'espace de sertissage est essentiellement complètement fermé,
e) contrôle de la réaction de l'indicateur (3).

2. Procédé selon la revendication 1, **caractérisé en ce que** l'indicateur (3) est réalisé en forme de ruban.

3. Procédé selon la revendication 2, **caractérisé en ce que** l'indicateur (3) est réalisé de telle sorte que les mâchoires de sertissage (13) doivent être fermées jusqu'à une fente inférieure à environ 1 mm pour le sertissage de l'indicateur (3).

4. Procédé selon la revendication 3, **caractérisé en ce que** l'indicateur présente une épaisseur inférieure à 1 mm.

5. Procédé selon l'une quelconque des revendications 1 à 4, **caractérisé en ce que** l'indicateur (3) lors du sertissage par lesdits deux côtés frontaux (16) subit une modification visible à l'oeil nu.

6. Procédé selon la revendication 5, **caractérisé en ce que** l'indicateur (3) subit lors du sertissage un changement de couleur.

7. Procédé selon l'une quelconque des revendications 1 à 6, **caractérisé en ce que** l'indicateur (3) est collé sur l'une des faces frontales (16) des mâchoires de sertissage (13).

8. Dispositif pour contrôler l'usure de pinces à sertissage, qui présentent au moins deux mâchoires de sertissage (13) qui peuvent être pressées ensemble dans un espace essentiellement fermé, comprenant un élément de contrôle, **caractérisé en ce que** l'élément de contrôle (2) présente un indicateur (3) et lors du sertissage d'un objet (20) entre les côtés frontaux (16) des mâchoires de sertissage (23), doit être disposé et est conçu de telle sorte que l'indicateur (3) est serti en dessous d'une largeur de fente prédéterminée relativement petite.

9. Dispositif selon la revendication 8, **caractérisé en ce que** l'élément de contrôle (2) est réalisé avec une forme plate et présente une épaisseur (A) inférieure à 1 mm de telle sorte que l'élément de contrôle (2) soit serti en dessous d'une largeur de fente inférieure à 1 mm.

10. Dispositif selon la revendication 7 ou 8, **caractérisé en ce que** l'élément de contrôle (2) est réalisé en forme de ruban.

11. Dispositif selon l'une quelconque des revendications 8 à 10, **caractérisé en ce que** l'indicateur (3) est disposé entre au moins deux couches (4, 5, 6).

12. Dispositif selon la revendication 11, **caractérisé en ce que** l'indicateur (3) est un colorant qui se distingue nettement sous une feuille de protection (4) lors du sertissage entre les mâchoires de sertissage (13).

13. Dispositif selon l'une quelconque des revendications 8 à 12, **caractérisé en ce que** l'élément de contrôle (2) peut être fixé de manière autocollante sur l'une des deux mâchoires de sertissage (13).

14. Dispositif selon l'une quelconque des revendications 8 à 13, **caractérisé par** une butée (23) pour le positionnement de l'élément de contrôle (2).

15. Dispositif selon l'une quelconque des revendications 8 à 13, **caractérisé en ce qu'**au moins un élément de contrôle (2) est monté sur un support ou une poignée (9).

16. Dispositif selon la revendication 15, **caractérisé en ce que** le support ou la poignée (9) est en forme de plaque.

17. Dispositif selon la revendication 15 ou 16, **caractérisé en ce que** l'on dispose une étiquette de contrôle (8) sur le support ou la poignée (9).

18. Dispositif selon la revendication 17, **caractérisé en ce que** l'étiquette de contrôle (8) est fixée de manière autocollante sur le support ou la poignée.

19. Dispositif selon la revendication 17 ou 18, **caractérisé en ce que** l'étiquette de contrôle (8) est au moins partiellement une partie de l'élément de contrôle (2).

20. Dispositif selon l'une quelconque des revendications 15 à 19, **caractérisé en ce que** le support ou la poignée (9) présente des informations (10) et notamment une indication pour l'utilisation.

21. Dispositif selon l'une quelconque des revendications 15 à 19, **caractérisé en ce que** plusieurs éléments de contrôle (2) sont placés sur le support ou la poignée (9).
